Europäisches Patentamt

European Patent Office

Office européen des brevets

(11) Veröffentlichungsnummer: **0 338 211**
A2

(12) **EUROPÄISCHE PATENTANMELDUNG**

(21) Anmeldenummer: 89103034.8

(51) Int. Cl.⁴: **B23K 7/02 , F23D 14/42**

(22) Anmeldetag: 22.02.89

(30) Priorität: 19.03.88 DE 3809291

(43) Veröffentlichungstag der Anmeldung:
25.10.89 Patentblatt 89/43

(84) Benannte Vertragsstaaten:
AT BE DE ES FR GB IT LU

(71) Anmelder: MESSER GRIESHEIM GMBH
Hanauer Landstrasse 330
D-6000 Frankfurt/Main 1(DE)

(72) Erfinder: Grohmann, Paul, Dip.-Ing.
Erlaufstrasse 23
A-2344 Maria-Enzersdorf(AT)

(54) Verfahren und Vorrichtung zum Schneiden metallischer Werkstücke.

(57) Beim Schneiden mit flüssigen Schneidmitteln, z.B. flüssigem Sauerstoff hat sich gezeigt, daß eine Auffächerung des Schneidmittelstrahles auftritt. Zur Vermeidung wird der Schneidmittelstrahl am Austritt aus der Schneiddüse mit einem Hüllgasstrom gleicher Geschwindigkeit umgeben.

## Verfahren und Vorrichtung zum Schneiden metallischer Werkstücke

Die Erfindung betrifft ein Verfahren nach dem Oberbegriff des Anspruches 1 und eine Vorrichtung zur Durchführung dieses Verfahrens.

Flüssigstrahlschneiddüsen werden zum Schneiden von Metallen, insbesondere Stahl, benutzt und zeichnen sich durch eine hohe Scheidgeschwindigkeit aus. Ihr besonderes Merkmal ist die Verwendung eines tiefkalten flüssigen Schneidmittels, z.B. flüssigen Sauerstoff, das als dünner Strahl unter hohem Druck - 200 bar und mehr - aus der Düse austritt.

Es wurde festgestellt, daß beim Austritt des Flüssigstrahles aus der Düse an der Außenseite des Strahles und zwar an der Grenzfläche zwischen Strahl und Umgebungsluft eine gewisse Auffächerung stattfindet. Diese ist bedingt durch den sehr großen Geschwindigkeitsunterschied zwischen dem flüssigen Schneidmittelstrahl und der im wesentlichen ruhenden Umgebungsluft. Dies hat den Nachteil, daß die Schnittfuge vergrößert, die Rauhigkeit der Schnittflächen erhöht und die Schneidgeschwindigkeit reduziert wird.

Aufgabe der Erfindung ist es, diese nachteiligen Erscheinungen dadurch zu vermeiden, daß die Auffächerung der Strahloberfläche beseitigt, zumindest stark reduziert wird.

Ausgehend von dem im Oberbegriff des Anspruches 1 berücksichtigten Stand der Technik ist diese Aufgabe erfindungsgemäß gelöst mit den im kennzeichnenden Teil des Anspruches 1 angegebenen Merkmalen.

Vorteilhafte Weiterbildungen der Erfindung sind in den Unteransprüchen angegeben.

Wie Versuche ergeben haben, konnten die Schneidparameter wesentlich verbessert werden. Diese Verbesserung beruht nicht auf dem in der DDR-Patentschrift 124 671 erwähnten Einschnürungseffekt eines gasförmigen Sauerstoffstrahles durch diesen umgebende Heizflammen. Da Flüssigkeiten und das gilt auch für tiefkalte Flüssiggase nur vernachlässigbar gering komprimierbar sind, kann keine Einschnürung stattfinden. Im Gegenteil ist davon auszugehen, daß durch die Temperatur der Heizflammen die Randzonen des Flüssigkeitsstrahles gasförmig werden und die Auffächerung vergrößert wird. Um so überraschender war es, daß die Schnittqualität verbessert und somit offensichtlich die Auffächerung verhindert wird. Es wird davon ausgegangen, daß dieses Ergebnis zum einen auf der im wesentlichen gleichen Geschwindigkeit des Flüssigstrahles und der Gashülle beruht und zum anderen auf der durch den hohen Druck bedingten kurzen Zeit, die zwischen Austritt des Strahles aus der Düse und dem Schnitt vergeht.

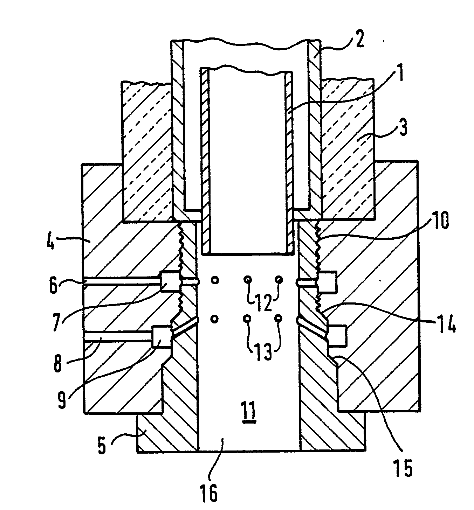

In der Zeichnung ist ein Ausführungsbeispiel einer erfindungsgemäßen Flüssigkeitsschneiddüse dargestellt.

Mit (1) ist die Zuleitung für das Schneidmittel, den flüssigen Sauerstoff, bezeichnet. Diese wird von einem Kühlrohr (2) umgeben, das mittig geteilt ist und für die Zu- und Ableitung von flüssigem Stickstoff dient. Das Kühlrohr (2) ist mit Vakuumisolierung (3) versehen.

An dem Düsenteil (1,2,3) ist die Einrichtung für den Hüllgasstrom befestigt. Diese besteht aus dem Zuleitungsteil (4) und dem Kammerteil (5). Im Zuleitungsteil (5) ist eine Leitung (6) für das Brenngas (z.B. Acetylen, Propan, Methan) angeordnet. Diese endet in einer Ringnut (7). Ferner ist im Zuleitungsteil (5) eine Leitung (8) für das Reaktionsgas (z.B. Sauerstoff) vorgesehen, die ebenfalls in einer Ringnut endet (9).

In den Zuleitungsteil (4) ist der Kammerteil (5) über ein Gewinde (10) auswechselbar befestigt. Der Kammerteil (5) weist eine Kammer (11) auf, in der die Schneidmittelzuleitung (1) endet. In der Kammer (11) sind zwei Reihen von Bohrungen (12 bzw. 13) angeordnet, die mit den Ringkanälen (7 bzw. 9) in Verbindung stehen. Die Bohrungsreihe (13) weist schräg nach oben gerichtete Kanäle auf um eine rasche und intensive Vermischung von Brenngas und Reaktionsgas zu erreichen. Um ein unkontrolliertes Austreten der Gase zu verhindern, sind Dichtflächen (14 bzw. 15) vorgesehen.

Wei bereits erwähnt, wird die Flüssigstrahlschneiddüse mit einem hohen Schneidmitteldruck betrieben. Dieser ist u.a. abhängig von dem zu schneidenden Material und dessen Dicke. Dementsprechend ist die Austrittsgeschwindigkeit des Schneidmittelstrahles aus dem Düsenaustritt (16) verschieden. Zur Anpassung der Austrittsgeschwindigkeit des Hüllgases bzw. - Gasgemisches werden unterschiedliche Kammergrößen und/oder Durchmesser der Bohrungsreihen (13 bzw. 14) und/oder Zuleitungsdrücke für die Gase benutzt. Auch hierzu ist der Kammerteil (5) auswechselbar.

## Ansprüche

1. Verfahren zum Schneiden metallischer Werkstücke mit einer Flüssigstrahlschneiddüse und einem tiefkalten, flüssigen, unter hohem Druck aus der Düse austretenden Schneidmittel, insbesondere flüssigen Sauerstoff,
dadurch gekennzeichnet,
daß der flüssige Schneidmittelstrahl von einem Gasstrahl umgeben wird, der diesen ab Austritt aus der Schneidmittelzuleitung (1) umhüllt und der an Düsenaustritt (16) etwa die gleiche Geschwindigkeit wie der flüssige Schneidmittelstrahl aufweist.

2. Verfahren nach Anspruch 1,
dadurch gekennzeichnet,
daß der Gasstrahl aus einem gezündeten Brenngas/Reaktionsgasgemisch besteht.

3. Verfahren nach Anspruch 2,
dadurch gekennzeichnet,
daß die Mischung und Zündung des Gasstrahles in einer Kammer (11) vor dem Düsenauslaß (16) erfolgt, in welche die Schneidmittelzuleitung (1) mündet.

4. Düse zur Durchführung des Verfahrens nach einem der Ansprüche 1 bis 3 mit einer isolierten Zuleitung (1) für das flüssige Schneidmittel,
dadurch gekennzeichnet,
daß die Schneidmittelzuleitung (1) in einer Kammer (11) endet, in der mindestens eine Bohrung (12/13) für die Zufuhr eines Gases oder je eine Öffnung (12/13) für die Zufuhr eines Brenngases und eines Reaktionsgases so angeordnet sind, daß das Gas bzw. das Gasgemisch den flüssigen Schneidmittelstrahl umhüllt.

5. Düse nach Anspruch 4,
dadurch gekennzeichnet,
daß der Kammerteil (5) auswechselbar ausgebildet ist, insbesondere über eine Verschraubung (10).

6. Düse nach Anspruch 5,
dadurch gekennzeichnet,
daß die Gasöffnungen (12/13) in der Kammer (11) mit entsprechenden Zuleitungen (6/7 bzw. 8/9) in Verbindung stehen.